# EUROPÄISCHE PATENTANMELDUNG

(11) **EP 1 510 743 A2**
(43) Veröffentlichungstag der Anmeldung: **02.03.2005**
(21) Anmeldenummer: 04017264.5
(22) Anmeldetag: 22.07.2004
(51) Int. Cl.: F16L 9/127, C08L 77/00, C08L 77/02, C08K 3/00, C08K 3/34, C08K 3/36

(54) **Kupplungsleitung**

(30) Priorität: 06.08.2003 DE 10335889
(71) Anmelder: REHAU AG + Co, 95111 Rehau (DE)
(72) Erfinder: Steffl, Udo, 95466 Weidenberg (DE)

(57) **Zusammenfassung**

Die Erfindung betrifft eine Kupplungsleitung aus einer Polyamidzusammensetzung, die besteht aus
- 100 Gewichtsteilen eines Polyamid 12
- 0,1 bis 50 Gewichtsteilen eines monovinylaromatischen Homo- oder Copolymeren
- 0,1 bis 50 Gewichtsteilen eines Polystyrolpfropfcopolymeren mit einem MAH-Gehalt größer 1
- 0,1 bis 30 Teilen eines oder mehrerer anorganischer Füllstoffe

Die erfindungsgemäße Kupplungsleitung zeigt pro Meter Leitungslänge eine Differenz der Volumenaufnahme zwischen 30 bar /Raumtemperatur und 30 bar /100 °C kleiner 150 mm3, entsprechend einem Ausrückwegverlust der Kupplung von maximal 0,5 mm.

## Beschreibung

Die vorliegende Erfindung betrifft eine Kupplungsleitung aus einer Polyamidzusammensetzung.
Die Kupplungsleitung verbindet den Kupplungsgeberzylinder mit dem Kupplungsnehmerzylinder. Sie ermöglicht damit den Transport des vom Geberzylinder verschobenen Druckmediums (Bremsflüssigkeit) zum Nehmerzylinder und somit die Öffnung und Schließung der Reibkupplung im Antriebsstrang einer Fahrzeuges.

Herkömmliche Leitungen im Automobilbau wie hydraulische Kupplungsleitungen oder Unterdruckleitungen werden in der Regel aus Stahl im Verbund mit Gummidichtungselementen hergestellt.

Gegenüber dem Stahl gewinnen Kunststoffleitungen aus Polyamid jedoch zunehmend an Bedeutung.
Stellt man Kupplungsleitungen aus Polyamid 12 her, sind zwar einige der Anforderungen an den Leitungswerkstoff wie Chemikalienbeständigkeit, Steifigkeit oder Ermüdungswiderstand bei häufigen Lastwechseln erfüllt, jedoch ist die Dauereinsatztemperatur auf maximal 100°C begrenzt.
Auf Kupplungsleitungen kommen jedoch heutzutage kurzzeitig thermische Belastungen von bis zu 150°C zu, dauerhaft gewährleistet muss eine Temperaturbeständigkeit von -40°C bis 100°C sein.
Hier stößt Polyamid 12 an seine Grenzen. Insbesondere die Temperaturabhängigkeit der Volumenzunahme von Polyamid 12 und die schwache Entkopplung von Druckschwingungen begrenzen den Leitungswerkstoff Polyamid 12. Im Temperaturbereich von etwa 100°C, also im Bereich der Glasübergangstemperatur, sinkt nicht nur der Berstdruck der Leitung, sondern es erhöht sich insbesondere das Volumen des Leitungswerkstoffes beim Druckaufbau, so dass es zu einer unerwünschten Verschiebung des Kupplungspunktes kommt. Herkömmliche Polyamid-12-Leitungen sind deshalb beschränkt auf eine Länge von 700 mm.

Um jedoch Kunststoffleitungen bis zu einer Länge von 1500 mm herstellen zu können, ist ein verbessertes Leitungsmaterial mit einer Differenz der Volumenaufnahme zwischen 30 bar/100°C und 30 bar/ Raumtemperatur von kleiner 150 mm³ und einer erhöhten Wärmeformbeständigkeit nach ISO 306 (Vicat B50) von größer 140°C notwendig.

Würde man anstelle von PA 12 Kupplungsleitungen solche aus Polyamid 6,12 einsetzen, wiesen diese zwar einen erhöhten Berstdruck und eine erhöhte Wärmeformbeständigkeit im Vergleich zu Polyamid 12 bei 100°C auf, dies führte aber auch zu einer unerwünschten Erhöhung der Steifigkeit bei Raumtemperatur. Diese mangelnde Flexibilität und auch die erhöhte Wasser/Feuchteaufnahme des Werkstoffes Polyamid 6,12 verhindern in der Praxis einen Einsatz als Kupplungsleitung.

Grundsätzlich kämen als Werkstoff für Kupplungsleitungen auch Blendzusammensetzungen auf der Basis von syndiotaktischen Polymeren in Frage, wie sie zum Beispiel aus WO 99/14273 bekannt sind. Darin wird eine Zusammensetzung beschrieben, die im wesentlichen aus folgenden Komponenten besteht:
(a) einem syndiotaktischen monovinylaromatischen Polymer;
(b) einem Polyamid;
(c) einem Verträglichkeitsvermittler für (a) und (b);
(d) einem gummiartigen Elastomer mit Mineralöl gestreckt;
(e) einen domänebildenden Kautschuk; und
(f) einem funktionalisierten Polyolefinkautschuk.

Allerdings dürfen Kupplungsleitungen nicht aus Materialien bestehen, aus denen Weichmacher auf Mineralölbasis in das Betriebsmedium gelangen können. Weiterhin weisen herkömmliche Produkte aus diesen Polymermaterialien eine zu hohe Fließfähigkeit auf, so dass eine Herstellung von Leitungen oder Rohren nach dem Extrusionsverfahren ausgeschlossen ist.

Besonders wesentlich ist, dass weder Polyamid 12- oder Polyamid 612-Leitungen noch die Polymerzusammensetzung aus WO 99/14273 eine Differenz der Volumenaufnahme zwischen 30 bar/100°C und 30 bar/Raumtemperatur von kleiner 150 mm³ entsprechend einem Ausrückwegverlust von maximal 0,5 mm aufweisen, als dass eine Kupplungsleitung von größer 700 mm Leitungslänge aus diesen Materialien hergestellt werden könnte.

Aufgabe der vorliegenden Erfindung ist es daher, Kupplungsleitungen zur Verfügung zu stellen, welche die aufgeführten erhöhten Anforderungen erfüllen und die genannten Nachteile und Probleme vermeiden.

Erfindungsgemäß gelingt die Lösung der Aufgabe durch die Merkmale gemäß Anspruch 1. Bevorzugte Ausführungen und Weiterbildungen der Erfindung sind in den Unteransprüchen ausgeführt.

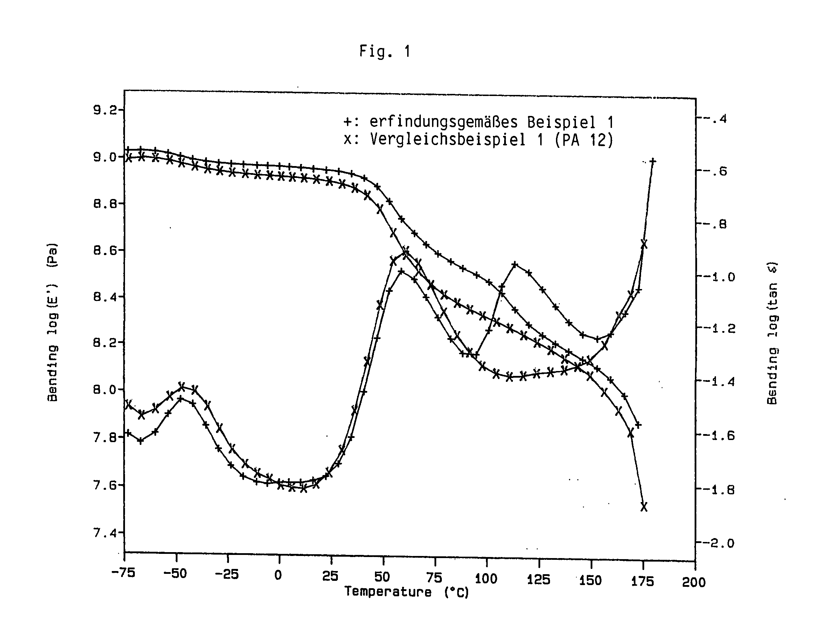

Einen ersten Überblick über die Temperaturabhängigkeit der Eigenschaften wie Modul und damit auch der Volumenzunahme gibt die dynamische Thermoanalyse (kurz: DMTA) mit der Kurve für den Speichermodul und dem Verlustfaktor tanδ. Ein Materialvergleich der erfindungsgemäßen Polyamidzusammensetzung mit einem herkömmlichen PA 12 ist aus Figur 1 ersichtlich. Die Kurven zeigen deutlich, dass das PA 12 im Temperaturbereich über 100 °C wesentlich weicher - und damit unter Druckbeanspruchung wesentlich nachgiebiger - ist, als der Werkstoff gemäß Beispiel 1.

Endgültige Klarheit gibt schließlich die eigentliche Volumenaufnahmeprüfung der Leitung (Änderung der Volumenaufnahme [mm³] mit dem Druck [bar] bei vorgegebener Temperatur). Dabei wird die Leitung einseitig verschlossen und von der anderen Seite eine Flüssigkeit hineingepumpt. Die Volumenaufnahme steht dann in direkter Beziehung zum aufgebrachten Druck.

Die erfindungsgemäße Kupplungsleitung besteht aus einer Polyamidzusammensetzung, welche mindestens die folgenden vier Komponenten umfasst:
- (I): 100 Gewichtsanteile einer Komponente (A) bestehend aus einem Polyamid 12, dessen Schmelzindex kleiner 100g/10min bei 275°C/5kg ist
- (II): 0,1-50 Gewichtsanteile einer Komponente (B), bezogen auf Komponente (A), bestehend aus einem syndiotaktischen monovinylaromatischen Homo- oder Copolymer
- (III): 0,1-50 Gewichtsanteile einer Komponente (C), bezogen auf Komponente (A), bestehend aus einem syndiotaktischen Polystyrolpfropfcopolymeren, dessen MAH-Gehalt größer 1 ist
- (IV): 0,1-30 Gewichtsanteile einer Komponente (D), bezogen auf Komponente (A), bestehend aus einem oder mehrerer anorganischer Füllstoffe, ausgewählt aus der Gruppe Magnesiumhydroxid, Calciumcarbonat, Talkum, Wollastonit, Kieselsäuren oder durch Kationen- oder Anionenaustausch modifizierte Silikate mit ionischen Schichtladungen, bevorzugt aufgeschlämmt in Öl- oder Fettkomponenten.

Überraschenderweise führt die gezielte Auswahl der Komponenten (A) bis (D) in Funktionalität und Molekulargewicht zu einem überlegenden Eigenschaftsbild, wie es in der Aufgabenstellung und den Beispielen formuliert ist.

### Im Folgenden wird die Erfindung näher erläutert:

Komponente (A) der erfindungsgemäßen Polyamidzusammensetzung ist ein thermoplastisches Polyamid mit einem Schmelzindex kleiner 100 g/10min bei 275°C/5kg, welches als polyamidbildendes Monomer Laurinlactam enthält.

Das syndiotaktische monovinylaromatische Homo- oder Copolymer (Komponente B) kann ein syndiotaktisches Polystyrol-Homo- oder Copolymeres sein, bevorzugt mit 80-100% syndiotaktischen Diaden, einem zahlenmittleren Molekulargewicht von 50.000 bis 2.500.000 und einem Schmelzpunkt von 160 bis 310°C. Der Gewichtsanteil der Komponenten (B), bezogen auf die Komponente (A), kann zwischen 0,1 und 50 Teilen betragen.

Das Polystyrolpfropfcopolymere (C), das aus syndiotaktischem Polystyrol durch Pfropfen von Maleinsäureanhydrid oder Ithaconsäureanhydrid oder (Meth)acrylsäure und deren Ester entstanden ist, besitzt einen Gewichtsanteil, bezogen auf die Komponente (A), von 0,1 bis 50 Teilen und einen MAH-Gehalt von größer 1.

Die Komponente (C) der erfindungsgemäßen Polyamidzusammensetzung wirkt dabei als Phasenvermittler für (A) und (B), so dass das syndiotaktische monovinylaromatische Homo- oder Copolymer (B) an das Polyamid (A) chemisch angekoppelt wird und die Viskosität und Temperaturbeständigkeit des Materials erhöht. Bei einem MAH-Gehalt kleiner 1 ist die Anbindung von Komponente (B) an (A) unvollständig und die Viskosität und Wärmeformbeständigkeit von Komponente (A) wird nicht signifikant erhöht.

Die Komponente (D) der erfindungsgemäßen Polyamidzusammensetzung besteht aus einem oder mehreren anorganischen Füllstoffe, welche ausgewählt sind aus der Gruppe Magnesiumhydroxid, Calciumcarbonat, Talkum, Wollastonit, Kieselsäuren oder durch Kationen- oder Anionenaustausch modifizierten Silikaten mit ionischen Schichtladungen, bevorzugt aufgeschlämmt in Öl- oder Fettkomponenten. Besonders bevorzugt sind anorganische Füllstoffe, die bereits bei sehr geringen Zugabemengen wirksam sind und über eine Schlichte an die Komponente (A) angebunden sind. Damit wird verhindert, dass der Steifigkeitszugewinn bei Raumtemperatur nicht zu groß ausfällt und die Leitungen zu steif werden.

Die Polyamidzusammensetzung kann gegebenenfalls bis zu 200 Gewichtsanteilen Zusätze, bezogen auf Komponente (A), enthalten, in Form von bis zu 5 Gewichtsanteilen Gleit- oder Verarbeitungshilfsmittel, bis zu 5 Gewichtsanteilen Pigmente, bis zu 2 Gewichtsanteilen Nukleierungsmittel, bis zu 1 Gewichtsanteil Stabilisatoren, bis zu 2 Gewichtsanteilen Treibmittel, bis zu 2 Gewichtsanteilen Antistatika, , bis zu 50 Gewichtsanteilen Glasfaser, bis zu 50 Gewichtsanteilen Leitfähigkeitsadditive, bis zu 50 Gewichtsanteilen Schlagzähmodifier und bis zu 50 Gewichtsanteilen Polyphenylenoxid (PPO).

Bevorzugte Leitfähigkeitsadditive sind Leitruße, Leitfähigkeitsgraphit, Metallpartikel, Kohlenstoff-Nanoröhrchen, PAN-Kohlenstoff-Fasern, vernickelte Kohlenstoff-Fasern, recyclierte Kohlenstoff-Fasern, meta))beschichtete Glasfasern oder Keramikfaser (Whisker). Ganz besonders bevorzugt sind Leitruße mit Teilchengröße zwischen 10 und 60nm und Stickstoff-Adsorption zwischen 30 und 1500 m²/g, DBPA-Adsorption (Dibutylphthalat-Adsorption = Ölaufnahmevermögen) zwischen 40 und 450 cm³/100g.

Die Einarbeitung des Leitrußes kann dabei in reiner Pulver/Perlenform erfolgen oder über ein Leitrußvorcompound auf Basis von Komponente (A).

Als Schlagzähmodifier kann ein Naturkautschuk; Polybutadien; Polyisopren; Polyisobutylen; ein Mischpolymerisat des Butadiens und/oder Isoprens mit Styrol und anderen Comonomeren, ein hydriertes Mischpolymerisat und/oder ein Mischpolymerisat, das durch Pfropfen mit Maleinsäureanhydrid, Ithaconsäureanhydrid, (Meth)acrylsäure und deren Ester entstanden ist, Verwendung finden. Der Schlagzähmodifier kann auch ein Pfropfkautschuk mit einem vernetzen elastomeren Kern sein, der aus Butadien, Isopren oder Alkylacrylaten besteht und eine Pfropfhülle aus Polystyrol hat; ein unpolares oder polares Olefinhomo- und Copolymeres wie Ethylen-Propylen-, Ethylen-Propylen-Dien- und Ethylen-Octen- oder Ethylen-Vinylacetat-Kautschuk oder ein unpolares oder polares Olefinhomo- und Copolymeres, das durch Pfropfen mit Maleinsäureanhydrid, Ithaconsäureanhydrid, (Meth)acrylsäure und deren Ester entstanden ist, sein. Der Schlagzähmodifier kann auch ein carbonsäurefunktionalisiertes Copolymeres wie Poly(ethen-co-(meth)acrylsäure) oder Poly(ethen-co-1-olefin-co-(meth)acrylsäure) sein , wobei das 1-Olefin ein Alken oder ein ungesättigter (Meth)acrylsäureester mit mehr als 4 Atomen ist, einschließlich solchen Copolymeren, in denen die Säuregruppen teilweise mit Metallionen neutralisiert sind.

Besonders bevorzugt sind durch Pfropfen mit Maleinsäureanhydrid funktionalisierte Mischpolymerisate des Butadiens mit Styrol, unpolare oder polare Olefinhomo- und Copolymere, die durch Pfropfen mit Maleinsäureanhydrid entstanden sind und carbonsäurefunktionalisierte Copolymere wie Poly(ethen-co-(meth)acrylsäure) oder Poly(ethen-co-1-olefin-co-(meth)acrylsäure), in denen die Säuregruppen teilweise mit Metallionen neutralisiert sind.

Die Kupplungsleitung kann, gegebenenfalls auch nachträglich, zur weiteren Erhöhung der Wärmeformbeständigkeit strahlenvernetzt werden.

Die Polyamidzusammensetzung der erfindungsgemäßen Kupplungsleitung kann in bekannter Weise durch Mischen und Erwärmen der einzelnen Komponenten, vorzugsweise unter Einwirkung von Scherkräften, in einem Aufbereitungsaggregat hergestellt werden. Sie lässt sich Dank ihres Schmelzindexwertes von 20 - 40 g/10 min bei 275°C/5 kg problemlos mittels Extrusion auch zu filigranen Kupplungsleitungen verarbeiten.

Die erfindungsgemäße Polyamidzusammensetzung lässt sich neben der Hauptanwendung Kupplungsleitung auch zur Herstellung von Unterdruckleitungen, Kraftstoff leitungen, Kabelummantelungen, Stahlseilummantelungen, Rohre für Fensterheber oder Lichtwellenleiterhüllen verwenden..

Die folgenden Beispiele erläutern die vorliegende Erfindung , ohne jedoch darauf beschränkt zu sein.

Die Polyamidzusammensetzungen sind in Gewichtsanteilen bezogen auf 100 Gewichtsanteile der Komponente (A) angegeben und betragen in den folgenden Beispielen bzw Vergleichsbeispielen:

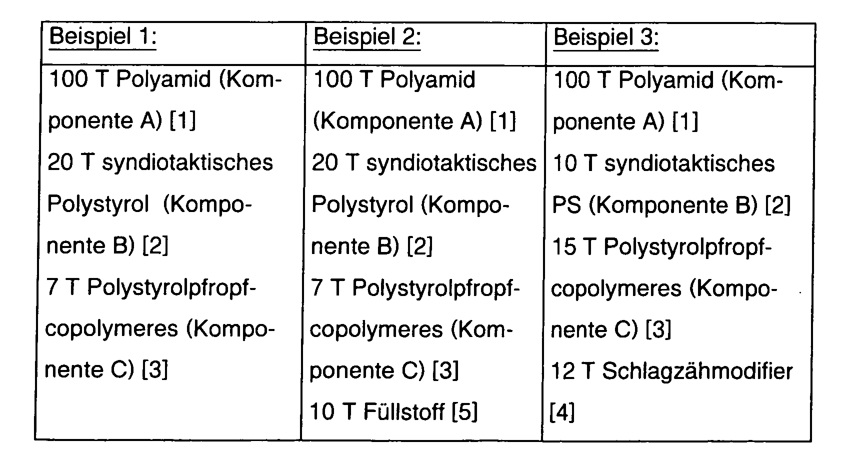

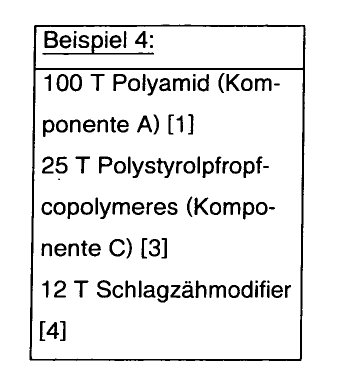

| Vergleichsbeispiel 1: | Vergleichsbeispiel 2: |
|---|---|
| Polyamid 12 [6] | Polyamid 6.12 [7] |

[1] Polyamid in den Beispielen 1-4: Polyamid 12, Schmelzpunkt:178°C, spezifische Dichte: 1,01 [g/cm³] Zug-E-Modul: 1400 [MPa], Wasseraufnahme: 23°C/Sättigung 1.4%, mittelviskos
[2] Syndiotaktisches Polystyrol: Mw = 300.000, Syndiotaktizität > 96%
[3] Polystyrolpfropfcopolymeres in den Bespielen 1-4: MFR (280°C/1kg) 33 [g/10 min], MAH-Gehalt 1,5.
[4] Schlagzähmodifier: Styrol-Ethylen/Butadien-Styrol-Triblockcopolymer, MFR (230°C/5kg) kleiner 1 [g/10min] ; Styrol/EB-Verhältnis 30/70
[5] Füllstoff im Beispiel 2: Wollastonit, spezifische Dichte: 2,85 [g/cm³], Härte nach Mohs 4,5
[6] Polyamid 12 im Vergleichsbeispiel 1: Schmelzpunkt: 178°C, spezifische Dichte: 1,01 [g/cm³], Zug-E-Modul: 1400 [MPa], Wasseraufnahme: 23°C/Sättigung 1.4%, hochviskos
[7] Polyamid 6.12 im Vergleichsbeispiel 2: Schmelzpunkt: 215°C, spezifische Dichte: 1,06 [g/cm³], Zug-E-Modul: 2100 [MPa], Wasseraufnahme: 23°C/Sättigung 2.8%, mittelviskos

### Beispiele 1-4:

In einem Doppelschneckenextruder mit Dosiereinrichtung für Granulate werden bei Massetemperaturen größer 270°C granulatförmiges syndiotaktisches Polystyrol [2], Polystyrolpfropfcopolymeres [3], Polyamid [1] und optionell Schlagzähmodifier [4] oder Füllstoff [5] dosiert. Die Mischung wird aufgeschmolzen, strangförmig extrudiert und geschnitten. Der resultierende Werkstoff hat die in der Tabelle angegebenen Eigenschaften, wobei Tabelle 1 die mechanischen Eigenschaften der erfindungsgemäßen Polyamidzusammensetzungen, Tabelle 2 die mechanischen Eigenschaften gemäß den Vergleichsbeispielen 1-2 zeigt.

**Tabelle 1**

| Eigenschaft | Einheit | Norm | Beispiel 1 | Beispiel 2 | Beispiel 3 | Beispiel 4 |
|---|---|---|---|---|---|---|
| E-Modul | [MPa] | ISO 527 | 1790 | 1850 | 1452 | 1633 |
| DMTA Prüfung | --- | Interne Prüf-methode | --- | --- | --- | --- |
| Wasseraufnahme 23°C/ Sättigung | [%] | ISO 62 | 1,10 | 1,02 | 1,12 | 1,00 |
| Längenausdehnungskoeffizienten 23-55°C | [10⁻⁴ K⁻¹] | ISO 11359 | 1,5 | 1,3 | 1,45 | 1,4 |
| Vicat B50 | [°C] | ISO 306 | 180 | 165 | 154 | 147 |
| MFR [275°C/5kg] | [g/10min] | DIN ISO 1133 | 35 | 24 | 32 | 22 |

**Tabelle 2**

| Eigenschaft | Einheit | Norm | Vergleichsbeispiel 1 | Vergleichsbeispiel 2 |
|---|---|---|---|---|
| E-Modul | [MPa] | ISO 527 | 1400 | 2100 |
| Wasserauf-nahme 23°C/ Sättigung | [%] | ISO 62 | 1,4 | 2,8 |
| Längenausdehnungskoeffizienten 23-55°C | [10⁻⁴ K⁻¹] | ISO 11359 | 1,4 | 1,3 |
| Vicat B 50 | [°C] | DIN ISO 306 | 140 | 185 |
| MFR [275°C/5kg] | [g/10min] | DIN ISO 1133 | 25 | Nb^{*} |
| DMTA-Prüfung | | Interne Prüf-methode | Siehe DMTA in Figur 1 | --- |

| | | | | |
|---|---|---|---|---|
| * Nb nicht bekannt | | | | |

## Patentansprüche

1. Kupplungsleitung, die - bis zu einer Gesamtlänge von 1500 mm - pro Meter Leitungslänge eine Differenz der Volumenaufnahme zwischen 30 bar/100°C und 30 bar/Raumtemperatur von kleiner 150 mm³, entsprechend einem Ausrückwegverlust von maximal 0,5 mm, aufweist und die aus einer Polyamidzusammensetzung besteht, deren Temperaturbeständigkeit nach ISO 306 (Vicat B50) größer 140°C und deren Wasseraufnahme nach ISO 62 bei 23°C kleiner 1,4% beträgt.

2. Kupplungsleitung nach Anspruch 1,
**dadurch gekennzeichnet,**
**dass** die Polyamidzusammensetzung mindestens aus den folgenden vier Komponenten besteht:
(A) 100 Gewichtsanteile einer Komponente (A) bestehend aus einem Polyamid 12, dessen Schmelzindex kleiner 100g/10min bei 275°C/5kg ist
(B) 0,1-50 Gewichtsanteile einer Komponente (B), bezogen auf Komponente (A), bestehend aus einem syndiotaktischen monovinylaromatischen Homooder Copolymer
(C) 0,1-50 Gewichtsanteile einer Komponente (C), bezogen auf Komponente (A), bestehend aus einem syndiotaktischen Polystyrolpfropfcopolymeren, dessen MAH-Gehalt größer 1 ist
(D) 0,1-30 Gewichtsanteile einer Komponente (D), bezogen auf Komponente (A), bestehend aus einem oder mehrerer anorganischer Füllstoffe, ausgewählt aus der Gruppe Magnesiumhydroxid, Calciumcarbonat, Talkum, Wollastonit, Kieselsäuren oder durch Kationen- oder Anionenaustausch modifizierte Silikate mit ionischen Schichtladungen, bevorzugt aufgeschlämmt in Öl- oder Fettkomponenten.

3. Polyamidzusammensetzung gemäß Anspruch 2, **dadurch gekennzeichnet, dass** Komponente (B) ein syndiotaktisches Polystyrol-Homo- oder Copolymeres mit 80-100% syndiotaktischen Diaden, einem zahlenmittleren Molekulargewicht von 50.000 bis 2.500.000 und einem Schmelzpunkt von 160 bis 310°C ist.

4. Polyamidzusammensetzung gemäß Anspruch 2, **dadurch gekennzeichnet, dass** Komponente (C) ein Polystyrolpfropfcopolymeres aus syndiotaktischem Polystyrol ist - entstanden durch Pfropfen von Maleinsäureanhydrid oder Ithaconsäureanhydrid oder (Meth)acrylsäure und deren Ester.

5. Polyamidzusammensetzung gemäß Anspruch 2, **dadurch gekennzeichnet, dass** zusätzlich bis zu 200 Gewichtsanteilen Zusätze, bezogen auf Komponente (A) in Form von bis zu 5 Gewichtsanteilen Gleit- oder Verarbeitungshilfsmittel, bis zu 5 Gewichtsanteilen Pigmente, bis zu 2 Gewichtsanteilen Nukleierungsmittel, bis zu 1 Gewichtsanteil Stabilisatoren, bis zu 2 Gewichtsanteilen Treibmittel, bis zu 2 Gewichtsanteilen Antistatika, bis zu 100 Gewichtsanteilen Prozessöle oder Weichmacher, bis zu 50 Gewichtsanteilen Glasfaser, bis zu 50 Gewichtsanteilen Leitfähigkeitsadditive, bis zu 50 Gewichtsanteilen Schlagzähmodifier oder bis zu 50 Gewichtsanteilen PPO enthalten sind.

6. Kupplungsleitung nach Anspruch 1, **dadurch gekennzeichnet dass** die Polyamidzusammensetzung wie in den Ansprüchen 2 bis 5 definiert ist.

7. Verwendung der Polyamidzusammensetzung nach den Ansprüchen 2 bis 6 für die Herstellung von Kabelummantelungen, Stahlseilummantelungen, Lichtwellenleiterhüllen, Rohre für Fensterheber, Unterdruckleitungen oder Kraftstoffleitungen.
